Europäisches Patentamt

European Patent Office

Office européen des brevets

(19)

(11) EP 0 757 063 B1

# (12) FASCICULE DE BREVET EUROPEEN

(45) Date de publication et mention
de la délivrance du brevet:
**06.05.1999 Bulletin 1999/18**

(51) Int Cl.$^6$: **C08F 10/00**, B01J 21/12,
B01J 27/16, C08F 4/02

(21) Numéro de dépôt: **96202046.7**

(22) Date de dépôt: **18.07.1996**

(54) **Procédé de fabrication d'un support pour catalyseurs de polymérisation d'oléfines et procédé de polymérisation d'oléfines**

Verfahren zur Herstellung eines Trägers für Olefinpolymerisationkatalysator und Verfahren zur Olefinpolymerisation

Method for producing a support for olefin polymerization catalyst and process for polymerizing olefins

(84) Etats contractants désignés:
**BE DE FR GB IT SE**

(30) Priorité: **31.07.1995 BE 9500659**

(43) Date de publication de la demande:
**05.02.1997 Bulletin 1997/06**

(73) Titulaire: **Solvay Polyolefins Europe-Belgium
(Société Anonyme)
1050 Bruxelles (BE)**

(72) Inventeurs:
- **Koch, Benoît
  4280 Hannut (BE)**
- **Rulmont, André
  4031 Liege (BE)**
- **Wijzen, Fabienne
  4630 Ayeneux (BE)**

(74) Mandataire: **Destryker, Elise Martine et al
Solvay Polyolefins Europe-Belgium
(Société Anonyme)
Département de la Propriété Industrielle
310, rue de Ransbeek
1120 Bruxelles (BE)**

(56) Documents cités:
**WO-A-94/26790          DE-A- 2 455 557**

**Description**

La présente invention concerne un procédé de fabrication d'un support pour catalyseurs de polymérisation d'oléfines, en particulier d'un support contenant de la silice, du phosphate d'aluminium et éventuellement de l'alumine. Elle concerne également un procédé de polymérisation d'oléfines à l'aide d'un catalyseur au chrome déposé sur des supports obtenus au moyen du procédé précité.

Des compositions contenant de la silice et du phosphate d'aluminium sont déjà connues. Par exemple, dans le brevet US 3,650,783 on divulgue des compositions contenant de la silice et un phosphate trivalent tel que du phosphate d'aluminium. Ces compositions peuvent être préparées par mise en contact d'un sol colloidal de silice simultanément avec une source d'un métal cationique trivalent (tel que l'aluminium) et une source de phosphate (tel que l'acide phosphorique), éventuellement en y ajoutant un composé basique tel que l'hydroxyde d'ammonium.

Par ailleurs, dans le brevet US 4,397,761 on divulgue des supports à base de silice et de phosphate d'aluminium qui peuvent être préparés (selon la première technique de la méthode C) en combinant un silicate (de sodium par exemple) simultanément avec une source d'ions d'aluminium (tel qu'un sel d'aluminium) et une source d'ions phosphates (de l'acide phosphorique par exemple) et en neutralisant le mélange par addition d'une base (telle que l'hydroxyde d'ammonium) pour obtenir un cogel.

Ces techniques connues présentent l'inconvénient de conduire à des compositions hétérogènes dans lesquelles des agglomérats de phosphate d'aluminium sont déposés à la surface de la silice. Des composés hétérogènes cristallisent trop vite lorsqu'ils sont soumis à une calcination à des températures supérieures à 700 °C pour qu'ils puissent convenir comme supports pour catalyseurs de polymérisation d'oléfines.

On a déjà proposé dans la demande de brevet WO 94/26790 (SOLVAY) de préparer des supports contenant de la silice, de l'alumine et/ou du phosphate d'aluminium de structure homogène et amorphe en mélangeant, dans une première étape, un alcool, de l'eau, on alcoolate de silicium et un acide, en y ajoutant, dans une deuxième étape, une solution acide d'un composé d'aluminium et/ou une solution d'une source d'ions phosphates, et, dans une troisième étape, un agent gélifiant pour obtenir un précipité, en lavant le précipité, puis en le séchant jusqu'à l'obtention d'une poudre, et en calcinant la poudre.

La présente invention vise à remédier aux inconvénients précités et à fournir un nouveau procédé permettant également l'obtention de supports de composition homogène, c'est à dire des coprécipités amorphes dans lesquels les constituants (de la silice, du phosphate d'aluminium et éventuellement de l'alumine) sont dispersés de manière homogène et qui présentent une résistance élevée à la cristallisation. Un autre objectif de l'invention est de fournir des supports présentant une surface spécifique élevée et un volume poreux élevé de manière à ce qu'ils soient utilisables comme supports de catalyseurs de polymérisation d'oléfines.

En conséquence, l'invention concerne on procédé de fabrication d'un support pour catalyseurs de polymérisation d'oléfines comprenant de la silice, du phosphate d'aluminium et éventuellement de l'alumine, selon lequel on ajoute, dans une première étape, une source de silice, choisie parmi les sols aqueux alcalins de silice et les solutions aqueuses alcalines de silicate inorganique, à une solution aqueuse d'une source d'ions phosphates de pH inférieur à 5, le pH du milieu étant maintenu inférieur à 5 pendant toute la durée de la première étape, on ajoute, dans une deuxième étape, un composé d'aluminium au milieu issu de la première étape, on forme, dans une troisième étape, un précipité par ajout au milieu issu de la deuxième étape d'un agent de précipitation, le pH du milieu de précipitation étant maintenu supérieur ou égal à 5 pendant toute la durée de la troisième étape.

Une des caractéristiques essentielles de l'invention réside dans le fait que le composé d'aluminium n'est pas mis en oeuvre simultanément avec la source de silice et la source d'ions phosphates mais est ajouté dans une étape ultérieure après avoir mélangé la source de silice avec la source d'ions phosphates. Une autre caractéristique importante de l'invention réside dans le fait que le pH est maintenu inférieur à 5 (de préférence inférieur à 4) pendant toute la durée de la première étape. Ceci s'est avéré nécessaire pour éviter toute gélification ou précipitation du mélange contenant la source de silice et la source d'ions phosphates, ce qui conduirait à une structure hétérogène.

La première étape du procédé selon l'invention est de préférence effectuée en versant rapidement et sous forte agitation la source de silice dans la solution aqueuse d'une source d'ions phosphates de manière à éviter que le pH ne dépasse, même localement, la valeur maximale de 5.

La source de silice mise en oeuvre dans la première étape du procédé selon l'invention présente généralement un pH d'au moins 8, de préférence d'au moins 9. Le pH de la source de silice peut être régulé par addition d'un composé basique tel que l'hydroxyde de sodium. La source de silice peut être mise en oeuvre à température ambiante. Lorsque la source de silice est un sol de silice, il est avantageux de mettre celui-ci en oeuvre à une température de 40 à 80 °C, de préférence de 50 à 70 °C.

Par silicate inorganique on entend désigner aux fins de la présente invention on sel de l'acide silicique. Il peut s'agir de tout type d'acide silicique connu tel que par exemple l'acide diorthosilicique ($Si_2O_7H_6$), l'acide monométasilicique ($SiO_3H_2$), l'acide trimésosilicique ($Si_3O_8H_4$), l'acide tétraparasilicique ($Si_4O_{10}H_4$), l'acide pentatétrérosilicique ($Si_5O_{12}H_4$), ... Le silicate inorgani-

que est de préférence choisi parmi les silicates des métaux alcalins, tels que les silicates de sodium et les silicates de potassium. Les silicates de sodium conviennent particulièrement bien.

Par sol aqueux de silice on entend désigner aux fins de la présente invention une suspension dans l'eau de particules colloidales (de taille moyenne allant de 0,001 a 1 µm) en une telle faible quantité que les particules ne forment pas de réseau.

Par source d'ions phosphates on entend désigner tout composé soluble dans la solution mise en oeuvre à la première étape et susceptible d'y former des ions phosphates. On peut citer à titre d'exemples les sels inorganiques phosphatés, par exemple le phosphate monocalcique de formule $CaH_4(PO_4)_2$, le phosphate disodique de formule $Na_2HPO_4$ et le phosphate tricalcique de formule $Ca_3(PO_4)_2$. Il peut également s'agir des éthers-sels phosphatés par exemple le phosphate d'éthyle de formule $(C_2H_5)_3PO_4$. On peut aussi citer le phosphate d'ammonium et l'acide phosphorique. On utilise de préférence l'acide phosphorique.

Le pH de la solution aqueuse d'une source d'ions phosphates est de préférence inférieur à 4, par exemple de 1 à 2. Il peut être régulé par addition d'un composé acide tel que l'acide nitrique ou chlorhydrique. L'acide chlorhydrique convient bien.

La durée de la première étape du procédé selon l'invention est en général d'au moins 1 minute, en particulier d'au moins 5 minutes. Elle est habituellement d'au maximum 1 heure, les durées d'au maximum 10 minutes étant les plus courantes.

Pendant la première étape du procédé selon l'invention, il est en général recommandé d'opérer à température ambiante, c'est-à-dire sans chauffer ou refroidir le mélange de la source de silice avec la source d'ions phosphates.

La deuxième étape du procédé selon l'invention consiste à ajouter au milieu issu de la première étape on composé d'aluminium. Il est préférable, comme dans la première étape, de maintenir le pH du milieu inférieur à 5 pendant toute la durée de la deuxième étape. A cet effet, on peut mettre en oeuvre une solution acide du composé d'aluminium, de préférence de pH inférieur à 5. La deuxième étape peut être effectuée à une température allant de la température ambiante à 80 °C, en particulier de la température ambiante à 50 °C. Il n'est pas recommandé de chauffer le milieu issu de la première étape, ni de chauffer le composé d'aluminium avant de le mettre en oeuvre.

Le composé d'aluminium mis en oeuvre dans la deuxième étape du procédé selon l'invention peut être choisi parmi les sels inorganiques d'aluminium. Le nitrate et le chlorure d'aluminium sont particulièrement préférés.

La durée de la deuxième étape du procédé selon l'invention est en général d'au moins 1 minute, en particulier d'au moins 5 minutes. Elle est habituellement d'au maximum 1 heure, les durées d'au maximum 15 minutes étant les plus courantes.

Les quantités de source de silice, de composé d'aluminium et de source d'ions phosphates mises en oeuvre dans le procédé selon l'invention peuvent varier dans une large mesure et sont déterminées par la composition finale souhaitée du support. Lorsque l'on souhaite obtenir un support ne contenant que de la silice et do phosphate d'aluminium, les quantités de la source de silice, du composé d'aluminium et de la source d'ions phosphates sont avantageusement telles que le support contient la silice et le phosphate d'aluminium dans un rapport molaire de 0,01 à 99 (de préférence de 0,05 à 20). Lorsque l'on souhaite que le support contient en outre de l'alumine, les quantités mises en oeuvre sont en général telles que le support contient la silice (X), l'alumine (Y) et le phosphate d'aluminium (Z) en un pourcentage molaire (X):(Y):(Z) de (10 à 95):(1 à 80):(1 à 85), et plus particulièrement de (20 à 80):(1 à 60):(5 à 60).

La troisième étape du procédé selon l'invention consiste à former un précipité sous l'effet d'un agent de précipitation, qui peut être choisi parmi tous les composés susceptibles de provoquer une coprécipitation des réactifs mis en oeuvre à la première et la deuxième étape (la source de silice, la source d'ions phosphates et le composé d'aluminium). On peut citer comme exemples d'agent de précipitation, l'oxyde d'éthylène, le carbonate d'ammonium et l'hydroxyde d'ammonium. L'hydroxyde d'ammonium convient bien. Le pH do milieu de coprécipitation est supérieur ou égal à 5, typiquement supérieur ou égal à 6; il est habituellement inférieur à 11, les valeurs inférieures à 10 étant recommandées, par exemple environ 8. De préférence, on maintient le pH à une valeur constante pendant toute la durée de la coprécipitation.

La quantité d'agent de précipitation mise en oeuvre à la troisième étape est en général suffisante pour permettre une coprécipitation complète de la source de silice, de la source d'ions phosphates et du composé d'aluminium; elle est de préférence légèrement supérieure à cette quantité suffisante.

On opère de préférence dans la troisième étape du procédé selon l'invention à une température inférieure ou égale à 30 °C, en particulier à une température de 0 à 20 °C. A cet effet, lorsqu'un sol de silice est mis en oeuvre dans la première étape à une température de 40 à 80 °C comme décrit plus haut, il est recommandé de refroidir le mélange issu de la deuxième étape à une température inférieure ou égale à 30 °C avant d'ajouter l'agent de précipitation.

La troisième étape du procédé selon l'invention peut éventuellement être prolongée par une étape de mûrissage qui a pour fonction de prolonger la coprécipitation et ainsi de moduler la surface spécifique et le volume poreux du précipité. La durée du mûrissage peut varier de 5 minutes à 50 heures. Les meilleurs résultats sont obtenus avec une durée d'au moins une heure. Pour des considérations d'ordre économique, on n'a pas intérêt à prolonger le mûrissage au delà de 10 heures.

Dans un mode de réalisation particulier du procédé selon l'invention, la troisième étape est suivie par des étapes ultérieures dans lesquelles on lave le précipité issu de la troisième étape, on le sèche jusqu'à l'obtention d'une poudre et on calcine la poudre.

Le lavage do précipité issu de la troisième étape du mode de réalisation particulier du procédé selon l'invention peut être réalisé par toute technique connue adéquate. Il consiste en général à mettre le précipité en contact avec une quantité d'eau suffisante pour éliminer les impuretés contenues dans le précipité, et ensuite à éliminer une partie au moins de cette quantité d'eau par tout moyen connu adéquat, par exemple par centrifugation ou par filtration. Ensuite, on peut soumettre le précipité lavé à l'eau, à un lavage au moyen d'un liquide organique qui a pour fonction d'éliminer l'eau qui imprègne le précipité. Les alcools conviennent bien.

Le précipité lavé est ensuite soumis à un séchage qui peut être effectué selon toute technique connue adéquate par exemple par atomisation ou par distillation, de préférence azéotropique, afin d'évaporer l'eau et éventuellement le liquide organique non éliminés précédemment, jusqu'à l'obtention d'une poudre.

A l'issue du séchage, on recueille une poudre du support que l'on soumet à une calcination, bien connue de l'homme du métier, qui a pour fonction d'extraire, à température élevée, les impuretés inorganiques de la poudre. Elle est généralement poursuivie jusqu'à ce que le poids de la poudre reste constant au cours du temps, tout en évitant une cristallisation de la poudre. La calcination est en général effectuée à une température de 300 à 1500 °C, typiquement de 350 à 1000 °C, de préférence de 400 à 600 °C.

Le procédé de fabrication selon l'invention permet l'obtention de supports qui présentent en général une surface spécifique d'au moins 100 m$^2$/g, en particulier d'au moins 180 m$^2$/g, les valeurs d'au moins 220 m$^2$/g étant les plus favorables. La surface spécifique est le plus souvent d'au plus 800 m$^2$/g, plus précisément d'au plus 700 m$^2$/g, les valeurs d'au plus 650 m$^2$/g étant les plus courantes. La surface spécifique (SS) du support est mesurée selon la méthode volumétrique (BET) de la norme britannique BS 4359/1 (1984).

Les supports préparés au moyen du procédé selon l'invention présentent avantageusement une température de cristallisation d'au moins 700 °C, par exemple d'au moins 1000 °C. La température de cristallisation est habituellement d'au plus 1800 °C, en particulier d'au plus 1500 °C. La température de cristallisation do support est déterminée en soumettant un échantillon du support à on traitement thermique à différentes températures (500 °C, 700 °C, 800 °C, 950 °C, 1050 °C, ...), et en examinant ensuite, après chaque traitement thermique, cet échantillon par diffraction des rayons X.

Les supports obtenus au moyen do procédé selon l'invention présentent habituellement on volume poreux d'au moins 1,5 cm$^3$/g, plus spécialement d'au moins 2 cm$^3$/g, les valeurs d'au moins 2,2 cm$^3$/g étant recommandées. Le volume poreux est généralement d'au plus 5 cm$^3$/g, en particulier d'au plus 4,5 cm$^3$/g, les valeurs d'au plus 4 cm$^3$/g étant courantes. Le volume poreux (VP) est la somme du volume poreux constitué de pores de rayon inférieur ou égal à 75 Å, mesuré par la méthode de pénétration à l'azote (BET) selon la technique volumétrique décrite dans la norme britannique BS 4359/1 (1984), et du volume poreux mesuré par la méthode de pénétration au mercure au moyen du porosimètre de type PORO 2000 commercialisé par CARLO ERBA CO, selon la norme belge NBN B 05-202 (1976). De préférence les supports présentent une surface spécifique (SS) et un volume poreux (VP) répondant à la relation :

$$SS < (VP \times 682 - 542),$$

dans laquelle SS et VP sont respectivement les valeurs numériques de la surface spécifique exprimée en m$^2$/g et du volume poreux exprimé en cm$^3$/g. Les supports particulièrement performants répondent à la relation :

$$SS \leq (VP \times 682 - 573).$$

Les supports obtenus au moyen du procédé selon l'invention se présentent généralement à l'état d'une poudre dont les grains ont un diamètre de 20 à 200 µm. Ils présentent habituellement un poids spécifique apparent supérieur ou égal à 50 kg/m$^3$, en particulier à 100 kg/m$^3$; il est généralement au maximum égal à 500 kg/m$^3$, typiquement à 300 kg/m$^3$. Le poids spécifique apparent est mesuré par écoulement libre selon le mode opératoire suivant : dans un récipient cylindrique de 50 cm$^3$ de capacité, on verse la poudre du support à analyser en évitant de la tasser, depuis une trémie dont le bord inférieur est disposé 20 mm au-dessus du bord supérieur du récipient. On pèse ensuite le récipient rempli de la poudre et arasé à l'aide d'une latte rectiligne, on déduit la tare du poids relevé et on divise le résultat obtenu (exprimé en g) par 50.

Les supports obtenus au moyen du procédé selon l'invention trouvent une application particulièrement intéressante comme supports pour catalyseurs de polymérisation d'oléfines, les catalyseurs consistant avantageusement en oxyde de chrome. Ces catalyseurs peuvent être obtenus de manière connue en soi par imprégnation de la poudre de support avec une solution aqueuse ou organique d'un composé de chrome, suivie d'un séchage en atmosphère oxydante, et d'une activation par chauffage à une température élevée (de 400 à 1000 °C par exemple) pour transformer une partie au moins du chrome en chrome hexavalent. Les catalyseurs peuvent également être obtenus au moyen d'un mélange mécanique de la poudre du support avec on composé solide de chrome. Ensuite, ce mélange peut être préactivé à une température inférieure à la température de fusion du composé de chrome avant de l'activer conventionnellement comme décrit ci-dessus. Le chrome est généralement présent dans les catalyseurs en proportion variant de 0,05 à 10 % en poids, de préférence de 0,1 à 5 % en poids, plus particulièrement de 0,25 à 2 % en poids de chrome sur base du poids total du catalyseur.

Les catalyseurs peuvent être utilisés pour la polymérisation d'oléfines, en particulier des oléfines contenant de 2 à 8 atomes de carbone, et plus particulièrement pour la production d'homopolymères d'éthylène ou de copolymères d'éthylène avec un ou plusieurs comonomères sélectionnés de préférence parmi les oléfines contenant de 2 à 8 atomes de carbone. Les comonomères préférés sont le butène et l'hexène.

L'invention concerne dès lors également un procédé de polymérisation d'oléfines selon lequel on met en contact, dans des conditions de polymérisation, au moins une oléfine avec un catalyseur à base de chrome déposé sur un support qui est fabriqué selon le procédé décrit plus haut.

Le procédé de polymérisation est de préférence effectué en suspension dans on diluant hydrocarboné tel que les hydrocarbures aliphatiques, cycloaliphatiques et aromatiques liquides, à une température telle qu'au moins 80 % (de préférence au moins 90 %) du polymère formé y soit insoluble. Les diluants préférés sont les alcanes linéaires tels que l'hexane ou les alcanes ramifiés tels que l'isobutane. La température de polymérisation est généralement choisie de 20 à 200 °C, de préférence de 50 à 150 °C, en particulier de 80 à 115 °C. La pression d'éthylène est choisie le plus souvent de la pression atmosphérique à 5 MPa, de préférence de 0,4 à 2 MPa, plus particulièrement de 0,6 à 1,5 MPa.

Les exemples dont la description suit, servent à illustrer l'invention. Dans ces exemples on a préparé des supports, que l'on a utilisé pour fabriquer des catalyseurs à base de chrome déposés sur ces supports. Ensuite, ces catalyseurs ont été employés pour polymériser de l'éthylène.

La signification des symboles utilisés exprimant les grandeurs mentionnées et les méthodes de mesure de ces grandeurs sont explicitées ci-dessous.

SS =      surface spécifique du support exprimée en $m^2/g$ et mesurée comme décrit plus haut.

$VP(N_2)$ =      volume poreux du support exprimé en $cm^3/g$ et mesuré par la méthode de pénétration à l'azote comme décrit plus haut.

$VP(Hg)$ =      volume poreux du support exprimé en $cm^3/g$ et mesuré par la méthode de pénétration au mercure comme décrit plus haut.

$T_c$ =      température de cristallisation du support exprimé en °C et mesuré comme décrit plus haut.

α =      activité catalytique exprimée en grammes de polymère, obtenus par heure et par gramme de catalyseur mis en oeuvre et divisés par la concentration de l'oléfine dans l'isobutane.

HLMI =      indice de fluidité du polymère en fondu mesuré à 190 °C sous une charge de 21,6 kg et exprimé en g/10 min, suivant la norme ASTM D 1238 (1986).

MVS =      masse volumique standard du polymère exprimé en $kg/m^3$ mesurée selon la norme ISO 1183 (1987).

OI =      teneur en oligomères dans le polymère exprimée en grammes d'oligomères par kilo de polymère et mesurée par extraction dans l'hexane à sa température d'ébullition.

Exemple 1 (conforme à l'invention)

1. Préparation du support

1.a. Première étape

Une source de silice a été préparée en ajoutant 10,01 g de silice dans 250 g d'une solution aqueuse de 1 M de NaOH à environ 65 °C. Une solution d'acide phosphorique a été préparée en mélangeant 19,2 g d'une solution concentrée a 85 % d'acide phosphorique avec 30 g d'eau et 10 ml d'une solution à 32 % d'acide chlorhydrique. La source de silice a été versée dans la solution d'acide phosphorique en agitant vigoureusement. Le pH de la solution obtenue est d'environ 1,7.

1.b. Deuxième étape

40,225 g de chlorure d'aluminium ($AlCl_3$. $6H_2O$) ont été dissous dans le milieu obtenu à l'issue de la première étape. Puis le milieu a été refroidi à 20 °C.

1.c. Troisième étape

On a ajouté le milieu issu de la deuxième étape à une solution aqueuse d'hydroxyde d'ammonium (500 ml) de pH 8 thermostatisée a 10 °C en maintenant le pH constant à une valeur de 8 par ajout d'une solution d'hydroxyde d'ammonium concentré.

1.d. Mûrissage, lavage, séchage et calcination

Le précipité ainsi obtenu a été soumis à on mûrissage pendant 2 h à 60 °C sous légère agitation. Ensuite il a été lavé avec une solution contenant 0,5 M de $NH_4Cl$, puis à l'eau et finalement avec de l'isopropanol. Le précipité lavé a été soumis à une distillation de l'azéotrope eau-isopropanol à pression atmosphérique et ensuite à pression réduite, de manière à obtenir une poudre. La poudre a alors été calcinée dans un lit fluidisé sous balayage d'air sec pendant 4 heures à 500 °C. On a recueilli une poudre présentant les caractéristiques suivantes :

SS =        210
VP(N$_2$) =    1,52
VP(Hg) =    2,76

| composition | AlPO$_4$ | 47,9 % mol |
|---|---|---|
| | SiO$_2$ | 48,4 % mol |
| | Al$_2$O$_3$ | 3,8 % mol |

T$_c$ > 700 °C

## 2. Préparation du catalyseur au chrome

On a mélangé le support obtenu en (1) avec de l'acétylacétonate de chrome en une quantité telle que le mélange comprenne 0,7 % en poids de chrome. Puis, on a traité le mélange ainsi obtenu dans un lit fluidisé à 150 °C pendant 2 h sous balayage d'air sec. Ensuite, on l'a calciné dans le lit fluidisé à 700 °C pendant 16 h sous air sec, et on a recueilli le catalyseur.

## 3. Polymérisation de l'éthylène

Dans un autoclave de 3 litres, on a introduit 138 mg du catalyseur obtenu en (2) et 1 litre d'isobutane. La température a été élevée à 102 °C et de l'éthylène, de l'hexène et de l'hydrogène ont été introduits dans l'autoclave à des rapports de concentrations molaires hydrogène/éthylène et hexène/éthylène de 0,04 et 0,05 respectivement. La pression d'éthylène et la température ont été maintenues constantes durant le temps nécessaire à la production de 323 g de polyéthylène. Le polyéthylène présentait les propriétés suivantes :

HLMI =    7,7
MVS =    951,4
OI =        12

Le catalyseur présentait une activité $\alpha$ de 19224.

## Exemple 2 (conforme à l'invention)

## 1. Préparation du catalyseur

Les opérations de l'exemple 1 ont été répétées à l'exception des quantités des réactifs mises en oeuvre qui ont été adaptées pour obtenir un support présentant les propriétés suivantes :

SS =        160
VP(N$_2$) =    1,96
VP(Hg) =    2,36

| composition | AlPO$_4$ | 35,6 % mol |
|---|---|---|
| | SiO$_2$ | 30,7 % mol |
| | Al$_2$O$_3$ | 33,8 % mol |

T$_c$ > 900°C

## 2. Polymérisation d'éthylène

Les opérations de l'exemple 1 ont été répétées. Le polyéthylène présentait les caractéristiques suivantes :

HLMI =    16,2
MVS =    949,2
OI =        17

Le catalyseur présentait une activité $\alpha$ de 25133.

## Revendications

1.  Procédé de fabrication d'un support pour catalyseurs de polymérisation d'oléfines comprenant de la silice, du phosphate d'aluminium et éventuellement de l'alumine, selon lequel on ajoute, dans une première étape, une source de silice, choisie parmi les sols aqueux alcalins de silice et les solutions aqueuses alcalines de silicate inorganique, à une solution aqueuse d'une source d'ions phosphates de pH inférieur à 5, le pH du milieu étant maintenu inférieur à 5 pendant toute la durée de la première étape, on ajoute, dans une deuxième étape, un composé d'aluminium au milieu issu de la première étape, on forme, dans une troisième étape, un précipité par ajout au milieu issu de la deuxième étape d'un agent de précipitation, le pH du milieu de précipitation étant maintenu supérieur ou égal à 5 pendant toute la durée de la troisième étape.

2.  Procédé selon la revendication 1, dans lequel, après la troisième étape, on lave le précipité issu de la troisième étape, on le sèche jusqu'à l'obtention d'une poudre et on calcine la poudre.

3.  Procédé selon la revendication 1 ou 2, dans lequel la source de silice se trouve à un pH d'au moins 8.

4.  Procédé selon l'une quelconque des revendications 1 à 3, dans lequel la source de silice est un sol aqueux alcalin de silice se trouvant à une température de 40 à 80 °C.

5.  Procédé selon l'une quelconque des revendications 1 à 3, dans lequel la source de silice est une solution aqueuse alcaline de silicate de sodium.

6. Procédé selon l'une quelconque des revendications 1 à 5, dans lequel la source d'ions phosphates est l'acide phosphorique, le composé d'aluminium est choisi parmi les sels inorganiques d'aluminium et l'agent de précipitation est une solution aqueuse d'hydroxyde d'ammonium.

7. Procédé selon l'une quelconque des revendications 1 à 6, dans lequel le mélange issu de la deuxième étape est refroidi à une température inférieure ou égale à 30 °C avant d'ajouter l'agent de précipitation et dans lequel le pH du milieu de précipitation est maintenu supérieur ou égal à 6.

8. Procédé selon l'une quelconque des revendications 1 à 7, dans lequel la source de silice, l'acide phosphorique et le composé d'aluminium sont mis en oeuvre en des quantités telles que le support contient de la silice (X), de l'alumine (Y) et du phosphate d'aluminium (Z) en un pourcentage molaire (X):(Y):(Z) de (10 à 95):(1 à 80):(1 à 85).

9. Procédé de polymérisation d'oléfines selon lequel

(1) on fabrique un support comprenant de la silice, du phosphate d'aluminium et éventuellement de l'alumine, par un procédé selon lequel on ajoute, dans une première étape, une source de silice, choisie parmi les sols aqueux alcalins de silice et les solutions aqueuses alcalines de silicate inorganique, à une solution aqueuse d'une source d'ions phosphates de pH inférieur à 5, le pH du milieu étant maintenu inférieur à 5 pendant toute la durée de la première étape, on ajoute, dans une deuxième étape, un composé d'aluminium au milieu issu de la première étape, on forme, dans une troisième étape, un précipité par ajout au milieu issu de la deuxième étape d'un agent de précipitation, le pH du milieu de précipitation étant maintenu supérieur ou égal à 5 pendant toute la durée de la troisième étape, on lave le précipité issu de la troisième étape, on le sèche jusqu'à l'obtention d'une poudre et on calcine la poudre;
(2) on forme un catalyseur en mélangeant ou en imprégnant la poudre issue de l'étape (1) avec un composé de chrome, puis en l'activant par chauffage à une température de 400 à 1000 °C; et
(3) on met le catalyseur issu de l'étape (2) en contact avec au moins une oléfine dans des conditions de polymérisation.

10. Procédé selon la revendication 9 caractérisé en ce que l'oléfine comprend de l'éthylène.

**Patentansprüche**

1. Verfahren zur Herstellung eines Trägers für Katalysatoren zur Polymerisation von Olefinen umfassend Siliciumdioxid, Aluminiumphosphat und gegebenenfalls Aluminiumoxid, wobei man in einer ersten Stufe eine Quelle für Siliciumdioxid, ausgewählt aus wäßrigen alkalischen Solen von Siliciumdioxid und wäßrigen alkalischen Lösungen von anorganischem Silicat, einer wäßrigen Lösung einer Quelle für Phosphationen mit einem pH kleiner 5 zugibt, wobei der pH des Mediums während der gesamten Dauer der ersten Stufe unter 5 gehalten wird, in einer zweiten Stufe eine Aluminiumverbindung dem in der ersten Stufe erhaltenen Medium zufügt, in einer dritten Stufe einen Niederschlag bildet, indem man dem in der zweiten Stufe erhaltenen Medium ein Ausfällungsmittel zufügt, wobei der pH des Ausfällungsmediums größer oder gleich 5 gehalten wird während der gesamten Dauer der dritten Stufe.

2. Verfahren nach Anspruch 1, bei dem man nach der dritten Stufe den in der dritten Stufe erhaltenen Niederschlag wäscht, trocknet, bis ein Pulver erhalten wird, und das Pulver calciniert.

3. Verfahren nach Anspruch 1 oder Anspruch 2, bei dem die Quelle für Siliciumdioxid einen pH von mindestens 8 hat.

4. Verfahren nach einem der Ansprüche 1 bis 3, bei dem die Quelle für Siliciumdioxid ein wäßriges alkalisches Siliciumdioxidsol ist mit einer Temperatur von 40 bis. 80°C.

5. Verfahren nach einem der Ansprüche 1 bis 3, bei dem die Siliciumdioxidquelle eine wäßrige alkalische Lösung von Natriumsilicat ist.

6. Verfahren nach einem der Ansprüche 1 bis 5, bei dem die Quelle für Phosphationen Phosphorsäure ist, die Aluminiumverbindung ausgewählt wird aus anorganischen Aluminiumsalzen und das Ausfällungsmittel eine wäßrige Lösung von Ammoniumhydroxid ist.

7. Verfahren nach einem der Ansprüche 1 bis 6, bei dem die in der zweiten Stufe erhaltene Mischung auf eine Temperatur kleiner oder gleich 30°C gekühlt wird, bevor das Aus fällungsmittel zugefügt wird, und bei dem der pH des Ausfällungsmediums größer oder gleich 6 gehalten wird.

8. Verfahren nach einem der Ansprüche 1 bis 7, bei dem die Quelle für Siliciumdioxid, Phosphorsäure und die Aluminiumverbindung in solchen Mengen eingesetzt werden, daß der Träger Siliciumdioxid (X), Aluminiumoxid (Y) und Aluminiumphosphat (Z) in einem molaren Prozentanteil von (X):(Y):(Z) von (10 bis 95):(1 bis 80):(1 bis 85) enthält.

9. Verfahren zur Polymerisation von Olefinen, bei dem man

(1) einen Träger mit Siliciumdioxid, Aluminiumphosphat und gegebenenfalls Aluminiumoxid herstellt, mit einem Verfahren, bei dem man in einer ersten Stufe eine Siliciumdioxidquelle ausgewählt aus wäßrigen alkalischen Siliciumdioxidsolen und wäßrigen alkalischen Lösungen von anorganischem Silicat, einer wäßrigen Lösung einer Quelle von Phosphationen mit einem pH kleiner 5 zufügt, wobei der pH des Mediums während der gesamten Dauer der ersten Stufe kleiner 5 gehalten wird, in einer zweiten Stufe eine Aluminiumverbindung dem in der ersten Stufe erhaltenen Medium zufügt, in einer dritten Stufe einen Niederschlag bildet, indem man dem in der zweiten Stufe erhaltenen Medium ein Ausfällungsmittel zufügt, wobei der pH des Mediums der Ausfällung größer oder gleich 5 gehalten wird während der gesamten Dauer der dritten Stufe, den in der dritten Stufe erhaltenen Niederschlag wäscht, trocknet, bis ein Pulver erhalten wird, und das Pulver calciniert;
(2) einen Katalysator bildet, indem man das in der Stufe (1) erhaltene Pulver mit einer Chromverbindung vermischt oder imprägniert, dann durch Erwärmen auf eine Temperatur von 400 bis 1000°C aktiviert und
(3) den in der Stufe (2) erhaltenen Katalysator mit mindestens einem Olefin unter Polymerisationsbedingungen in Kontakt bringt.

10. Verfahren nach Anspruch 9, dadurch gekennzeichnet, daß das Olefin Ethylen umfaßt.

**Claims**

1. Process for the manufacture of a support for olefin polymerization catalysts comprising silica, aluminium phosphate and optionally alumina, according to which a source of silica, chosen from alkaline aqueous silica sols and alkaline aqueous solutions of inorganic silicate, is added, in a first step, to an aqueous solution of a source of phosphate ions which has a pH of below 5, the pH of the medium being maintained below 5 throughout the first step and an aluminium compound is added, in a second step, to the medium obtained from the first step and a precipitate is formed, in a third step, by adding a precipitation agent to the medium obtained from the second step, the pH of the precipitation medium being maintained above or equal to 5 throughout the third step.

2. Process according to Claim 1, in which, after the third step, the precipitate obtained from the third step is washed and dried until a powder is obtained, and this powder is calcined.

3. Process according to Claim 1 or 2, in which the source of silica is at a pH of at least 8.

4. Process according to any one of Claims 1 to 3, in which the source of silica is an aqueous alkaline silica sol which is at a temperature of from 40 to 80°C.

5. Process according to any one of Claims 1 to 3, in which the source of silica is an aqueous alkaline sodium silicate solution.

6. Process according to any one of Claims 1 to 5, in which the source of phosphate ions is phosphoric acid, the aluminium compound is chosen from inorganic aluminium salts and the precipitation agent is an aqueous ammonium hydroxide solution.

7. Process according to any one of Claims 1 to 6, in which the mixture obtained from the second step is cooled to a temperature below or equal to 30°C before adding the precipitation agent and in which the pH of the precipitation medium is maintained above or equal to 6.

8. Process according to any one of Claims 1 to 7, in which the source of silica, the phosphoric acid and the aluminium compound are used in amounts such that the support contains silica (X), alumina (Y) and aluminium phosphate (Z) in an (X):(Y):(Z) molar percentage of (10 to 95):(1 to 80):(1 to 85).

9. Process for the polymerization of olefins according to which

(1) a support comprising silica, aluminium phosphate and optionally alumina, is manufactured by a process according to which a source of silica, chosen from alkaline aqueous silica sols and alkaline aqueous solutions of inorganic silicate, is added, in a first step, to an aqueous solution of a source of phosphate ions which has a pH of below 5, the pH of the medium being maintained below 5 throughout the first step and an aluminium compound is added, in a second step, to the medium obtained from the first step and a precipitation is formed, in a third step, by adding a precipitation agent to the medium obtained from the second step, the pH of the precipitation medium being maintained above or equal to 5 throughout the third step, the precipitate obtained from the third step is washed and dried until a powder is obtained, and this powder is calcined,

(2) a catalyst is formed by mixing or impregnating the powder obtained in step (1) with a chromium compound, followed by activating it by heating at a temperature from 400 to 1000°C, and

(3) the catalyst obtained after step (2) is placed in contact, under polymerization conditions, with at least one olefin.

10. Process according to Claim 9, characterized in that the olefin comprises ethylene.